Europäisches Patentamt

European Patent Office

Office européen des brevets

(11) Veröffentlichungsnummer: **0 311 820**
**A2**

(12) **EUROPÄISCHE PATENTANMELDUNG**

(21) Anmeldenummer: **88115545.1**

(22) Anmeldetag: **22.09.88**

(51) Int. Cl.⁴: **B24B 41/00**

(30) Priorität: **14.10.87 CH 4013/87**

(43) Veröffentlichungstag der Anmeldung:
**19.04.89 Patentblatt 89/16**

(84) Benannte Vertragsstaaten:
**AT CH DE FR GB IT LI**

(71) Anmelder: **Fritz Studer AG**
**Glockenthal**
**CH-3601 Thun(CH)**

(72) Erfinder: **Tanner, Hans**
**Bergliweg 65**
**CH-3117 Oppligen(CH)**

(74) Vertreter: **Dauster, Hanjörg, Dipl.-Ing. et al**
**WILHELM & DAUSTER Patentanwälte**
**Hospitalstrasse 8**
**D-7000 Stuttgart 1(DE)**

(54) **Schwenkbarer Spindelstock.**

(57) Bei einem schwenkbaren Schleifspindelstock mit einem wenigstens eine Spindelachse enthaltenden Oberteil, der mittels einer Einrichtung zum Positionieren bezüglich seiner Winkelposition durch Schwenken um eine Schwenkachse relativ zu einem stationären Unterteil einstellbar ist, ist vorgesehen, daß an den Oberteil ein eine in Umfangsrichtung zur Schwenkachse gerichtete Stellkraft aufweisender Stellantrieb angreift, gegen den der Oberteil mittels Federkraft vorgespannt ist.

Fig.2

EP 0 311 820 A2

## Schwenkbarer Spindelstock

Die Erfindung betrifft einen schwenkbaren Spindelstock mit einem wenigstens eine Spindelachse enthaltenden Oberteil, der mittels einer Einrichtung zum Positionieren bezüglich seiner Winkelposition durch Schwenken um eine Schwenkachse relativ zu einem stationären Unterteil einstellbar ist.

Bei einem schwenkbaren Schleifspindelstock muß die Winkelposition möglichst genau eingenommen werden, da die Genauigkeit der mit der Schleifmaschine produzierten Werkstücke unmittelbar davon abhängt. Es sind grundsätzlich zwei Prinzipien bekannt, wie das Positionieren durchgeführt werden kann. Nach dem ersten Prinzip wird ein mechanisches Einrasten vorgesehen, wobei die Positionierung mittels Nut und Keil erfolgt. Die Einrastbewegung kann entweder parallel zur Schwenkachse ähnlich der bekannten Hirthverzahnung erfolgen. Es kann aber auch radial zur Schwenkache eine oder mehrere Nuten und entsprechende Keile angeordnet werden, so daß die Einrastbewegung radial zur Schwenkachse erfolgt Mit diesem Prinzip sind hohe Positioniergenauigkeiten zu erreichen, jedoch ist die Positionierung nur in Stufen oder Schritten möglich. Um eine ausreichende Festigkeit zu erhalten, müssen Nut und Keil relativ stark dimensioniert werden, so daß entsprechend große Verdrehwinkelstufen erhalten werden.

Bei dem anderen Prinzip wird das Oberteil stufenlos mittels eines elektromechanischen Stellgliedes verdreht. Hierzu wird auf der Schwenkachse des Schleifspindelstockes ein Schneckenrad angebracht, in das eine Schnecke eingreift, die von einem Stellmotor verdreht wird. Die Anzahl der Umdrehungen des Stellmotors und die jeweilige Winkelposition dieses Stellmotors werden durch einen rotierenden Meßgeber bestimmt. Sie lassen außerdem Rückschlüsse auf den Positionierwinkel des Schleifspindelstocks zu. Damit ist es zwar möglich, stufenlos eine beliebige Einstellung des Schwenkwinkels vorzunehmen, jedoch ist bei diesem Prinzip die Genauigkeit nicht besonders groß. In der Übertragungskette Schneckenrad-Schnecke wird ein Spiel benötigt, um eine einwandfreie Funktion zu gewährleisten. Außerdem erfolgt der Kraftangriff für die Verdrehbewegung und auch für die anschließende Fixierung relativ nahe an der Schwenkachse, so daß aufgrund des relativ kurzen Hebelarms eine relativ geringe Drehsteifigkeit erhalten wird.

Der Erfindung liegt die Aufgabe zugrunde, einen schwenkbaren Schleifspindelstock der eingangs genannten Art zu schaffen, durch die es möglich ist, eine oder mehrere darin eingebaute Schleifspindeln hochgenau und verdrehsteif in einem beliebigen Schwenkwinkel zu positionieren.

Diese Aufgabe wird dadurch gelöst, daß an den Oberteil ein eine in Umfangsrichtung zur Schwenkachse gerichtete Stellkraft aufweisender Stellantrieb angreift, gegen den der Oberteil mittels Federkraft vorgespannt ist.

Bei dieser Ausbildung, die nach dem sogenannten Sinusprinzip arbeitet, wird ein Spiel durch die Vorspannung mittels Federkraft ausgeschaltet. Der Angriff des Stellantriebs an den Oberteil kann in genügend großem Abstand zu der Schwenkachse erfolgen, so daß mit relativ geringen Kräften eine hohe Drehsteifigkeit erreicht werden kann.

In weiterer Ausgestaltung der Erfindung wird vorgesehen, daß zwischen dem Oberteil und dem Unterteil ein Zwischenteil angeordnet ist, der mittels einer Einrichtung zum Vorpositionieren gegenüber dem Unterteil um die Schwenkachse verschwenkbar ist und gegenüber welchem der Oberteil mittels der Einrichtung zum Positionieren um die gleiche Schwenkachse verschwenkbar ist. Bei dieser Ausgestaltung erfolgt die Positionierung in zwei Schritten, wobei eine relativ grobe Vorpositionierung insbesondere in Schritten vorgenommen wird, von der anschließend ausgehend die Feinpositionierung vorgenommen wird, bei welcher erst der Oberteil gegenüber dem Zwischenteil verdreht wird.

Bei einer vorteilhaften Ausführungsform der Erfindung wird vorgesehen, daß der Oberteil mit einem im wesentlichen radial zur Schwenkachse gerichteten Anschlag versehen ist, an den auf einer Seite eine im wesentlichen tangentail zur Schwenkachse gerichtete Spindel und auf der gegenüberliegenden Seite ein Spannelement angreifen.

In weiterer Ausgestaltung wird dabei vorgesehen, daß die Spindel mit einem Stellmotor antreibbar ist.

In einer weiteren Ausgestaltung der Erfindung wird vorgesehen, daß die Einrichtung zum Vorpositionieren von Unterteil und Zwischenteil eine ein schrittweises Positionieren gestattende Verzahnung, eine in axialer Richtung zur Schwenkachse wirksame Hubeinrichtung und einen in Umfangsrichtung der Schwenkachse wirksamen Vorpositionierantrieb enthält. Das Vorpositionieren in relativ groben Schritten kann auf diese Weise sehr exakt durchgeführt werden. Das anschließende Feinpositionieren erfordert dann nur noch einen relativ geringen Stellweg, der in der Größenordnung der Zahnteilung liegt.

In weiterer Ausgestaltung der Erfindung wird vorgesehen, daß der Stellmotor und/oder die Hubeinrichtung und der Vorpositionierantrieb mit einer einen Rechner enthaltenden Steuerung verbunden sind. Dadurch ist es möglich, die Verstellwerte in einen Rechner einzugeben, der dann das Anfahren der gewünschten Winkelwerte ansteuert. Die in den Rechner eingebrachten Winkelwerte zur Verstellung des Schwenkwinkels können in vorteilhafter Weise direkt aus einem in die Werkzeugmaschine für das betreffende Werkstück eingegebenen Arbeitsprogramm entnommen werden.

Weitere Merkmale und Vorteile der Erfindung ergeben sich aus der nachfolgenden Beschreibung des in der Zeichnung dargestellten Ausführungsbeispiels.

Fig. 1 zeigt eine geschnittene Draufsicht auf eine Einrichtung zum Feinpositionieren nach dem Sinusprinzip eine Spindelachse enthaltenden Oberteils eines Schleifspindelstockes,

Fig. 2 eine geschnittene Draufsicht der Einrichtung nach Fig. 1 in einer abweichenden, einem vorprogrammierten Werkstück angepaßten Winkelposition und

Fig. 3 eine Seitenansicht eines Schleifspindelstockes mit einer Einrichtung zum Vorpositionieren und einer Einrichtung zum Positionieren, der eine Einrichtung zum Positionieren nach dem Sinusprinzip überlagert ist.

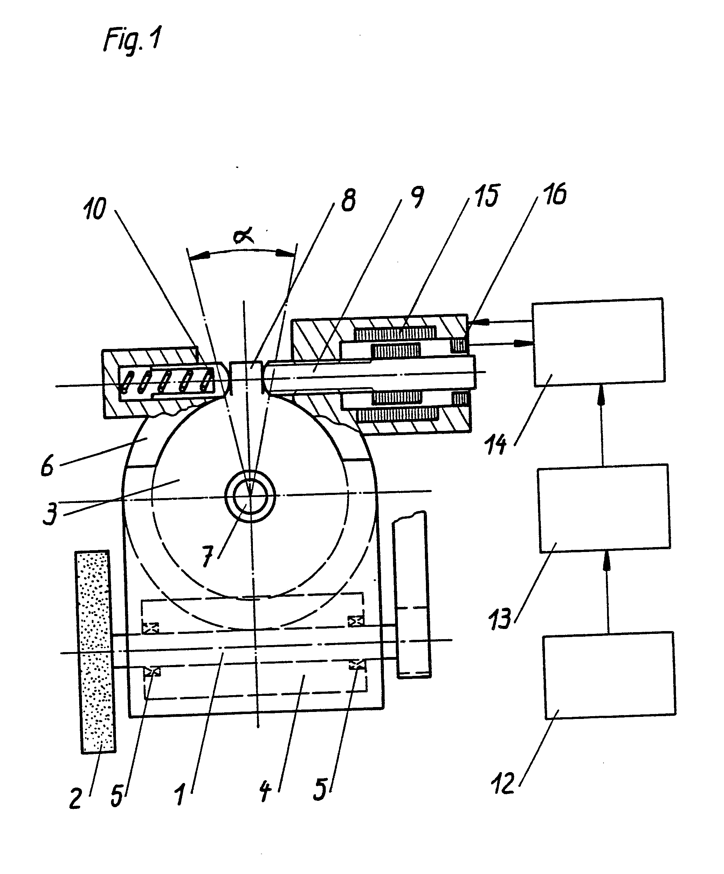

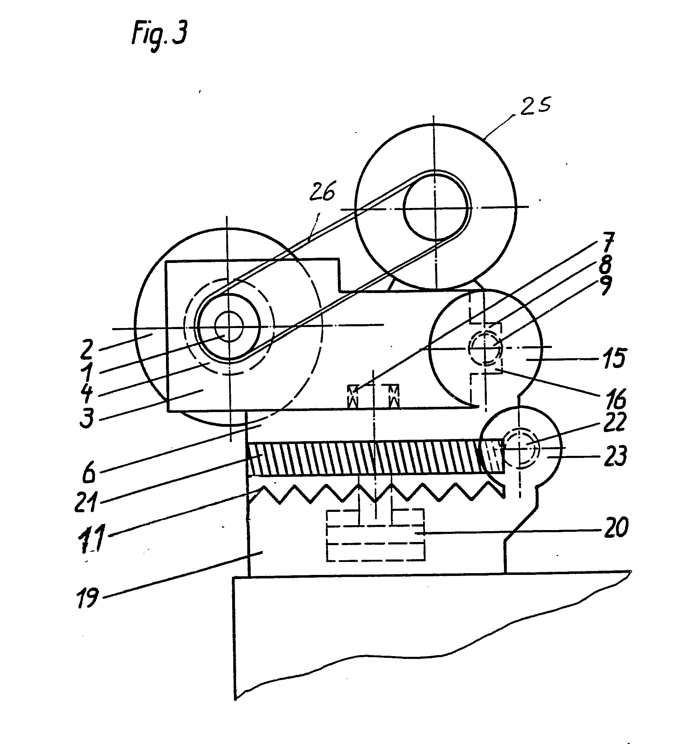

Das in Fig. 1 dargestellte Oberteil (3) eines schwenkbaren Schleifspindelstocks trägt eine Schleifspindel (1), die eine Spindelhülse (4) aufweist, in welcher die Schleifspindel (1) mit Lagern (5) gelagert ist. Die Schleifspindel (1) trägt an einem Ende eine Schleifscheibe (2). Am anderen Ende wird sie von einem Elektromotor (25) über einen Riemen (26) angetrieben (siehe auch Fig. 3).

Der Oberteil (3) ist um eine Schwenkachse (7) verschwenkbar gelagert.seine Winkelposition wird über einen radialen Anschlag (8) bestimmt. An diesen radialen Anschlag (8) greift auf einer Seite eine Schraubspindel (9) an,während sich gegen die andere, gegenüberliegende Seite ein federbelastetes Spannelement (10) abstützt. Die Schraubspindel (9) und das federbelastete Spannelement (10) sind in einem Zwischenteil des Schleifspindelstocks angeordnet. Durch Verstellen der Schraubspindel, die vorzugsweise mit einem Feingewinde mit einer relativ geringen Steigung in den Zwischenteil (6) eingeschraubt ist, ist eine Winkelverstellung um den Winkel ($\alpha$) möglich. Die Anschlagnase (8) befindet sich in realtiv großem radialem Abstand zur Schwenkachse (7), so daß die Kräfte der Schraubspindel (9) und des Spannelementes (10), die in etwa radial zur Schwenkachse gerichtet sind, relativ klein gehalten werden können, und dennoch eine hohe Drehsteifigkeit bewirken. Das Spannelement (10) sorgt dafür, daß jegliches Spiel ausgeschaltet wird.

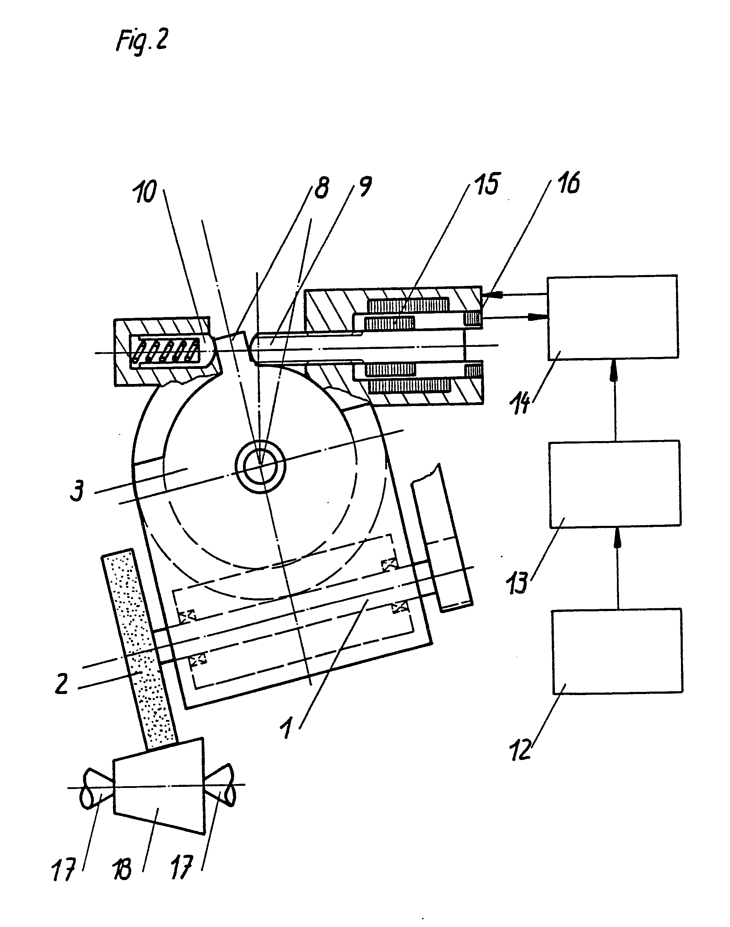

Wie aus Fig. 2 zu ersehen ist, ist das Oberteil (3) mit der Schleifspindel (1) um die Schwenkachse (7) verschwenkt worden, um ein Werkstück (18) mit einer konischen Außenkontur zu schleifen, das in Spitzen (17) eingespannt ist.

Die Schraubspindel (9) wird mittels eines Stellmotors (15) verstellt, der an einen Servoverstärker (14) angeschlossen ist. Dem Servoverstärker (14) ist ein Rechner (13) vorgeschaltet, der den Wert der Winkelverstellung errechnet. Die Informationen über die Verstellung erhält der Rechner (13) über einen Arbeitsprogrammspeicher (12), welcher ein für ein betreffendes Werkstück (18) bestimmtes Arbeitsprogramm enthält. Dieser Arbeitsprogrammspeicher (12) gibt, sofern konische Partien geschliffen werden müssen, die entsprechenden Informationen an den Rechner (13) weiter, der den Verstellweg der Schraubspindel (9) ausrechnet und entsprechende Befehle an den Servoverstärker gibt. Der Stellmotor (15) ist mit einem Drehmeldegeber (16) versehen, der die erreichte Position rückmeldet.

Wie aus Fig. 1 und 2 zu ersehen ist, ist der mögliche Winkelverstellweg beschränkt, der über das Verstellen der Schraubspindel (9) erzielbar ist. Um dennoch große Winkelverstellungen vornehmen zu können, wird die bisher beschriebene Einrichtung zum Verstellen des Drehwinkels als eine Einrichtung zum Feinpositionieren eingesetzt, während zusätzlich eine weitere Einrichtung zum Vorpositionieren zusätzlich vorhanden ist.

Wie aus Fig. 3 zu ersehen ist, ist der Schleifspindelstock in den Oberteil (3), einen Zwischenteil (6) und einen Unterteil (19) unterteilt. Die bisher beschriebene Einrichtung zum Positionieren positioniert den Oberteil (3) gegenüber dem Zwischenteil (6), der ebenfalls um die Schwenkachse (7) verstellbar ist. Eine weitere Verstellmöglichkeit besteht zwischen dem Zwischenteil (6) und dem Unterteil (19). Zwischen diesen beiden ist eine axiale Verzahnung (11) (System Hirth) vorgesehen. Der Zwischenteil (6) ist zusammen mit dem Oberteil (3) gegenüber dem Unterteil (19) anhebbar, so daß der Formschluß der Verzahnung (11) freigegeben wird. In dieser Position ist ein Vorpositionierantrieb betätigbar, mit welchem der Zwischenteil (6) gegenüber dem Unterteil (19) um die Schwenkachse (7) verdrehbar ist. Hierzu ist der Zwischenteil (6) mit einem Schneckenrad (21) versehen, in welche eine Schnecke (22) eines Schneckenmotors (23) angreift, der auf dem Unterteil (19) angeordnet ist.

Der Schneckenmotor (23) ist ebenfalls über einen Servoverstärker an den Rechner (13) angeschlossen und meldet auch seine jeweils erreichte Grobposition an diesen zurück. Es wird somit eine zweistufige Winkelpositionierung erreicht, indem zunächst eine Grobpositionierung zwischen dem Unterteil (19) und dem Zwischenteil (6) vorgenommen wird. Aufgrund der axialen Verzahnung (11) zwischen Unterteil (19) und Zwischenteil (6) erfolgt diese Grobpositionierung mit hoher Winkelgenauigkeit. Anschließend erfolgt über die Schraubspindel (9) und den Anschlag (8) die Feinpositionierung, wobei vorgesehen ist, daß der Stellweg der Schraubspindel (9) wenigstens so groß ist, daß die von ihm über die Anschlagnase (8) bewirkte Winkelverstellung des Oberteils wenigstens der Zahnteilung der Verzahnung (11) entspricht.

## Ansprüche

1. Schwenkbarer Schleifspindelstock mit einem wenigstens eine Spindelachse enthaltenden Oberteil (3), der mittels einer Einrichtung zum Positionieren bezüglich seiner Winkelposition durch Schwenken um eine Schwenkachse (7) relativ zu einem stationären Unterteil (19) einstellbar ist, dadurch gekennzeichnet, daß an den Oberteil (3) ein eine in Umfangsrichtung zur Schwenkachse (7) gerichtete Stellkraft aufweisender Stellantrieb (8, 9) angreift, gegen den der Oberteil (3) mittels Federkraft (10) vorgespannt ist.

2. Schleifspindelstock nach Anspruch 1, dadurch gekennzeichnet, daß zwischen dem Oberteil (3) und dem Unterteil (19) ein Zwischenteil (6) angeordnet ist, der mittels einer Einrichtung zum Vorpositionieren (11,21,22,23) gegenüber dem Unterteil (19) um die Schwenkachse (7) verschwenkbar ist und gegenüber welchem der Oberteil (3) mittels der Einrichtung (8,9,10) zum Positionieren um die gleiche Schwenkachse (7) verschwenkbar ist.

3. Schleifspindelstock nach den Ansprüchen 1 und 2, dadurch gekennzeichnet, daß der Oberteil (3) mit einem im wesentlichen radial zur Schwenkachse (7) gerichteten Anschlag (8) versehen ist, an den auf einer Seite eine im wesentlichen tangential zur Schwenkachse (7) gerichtete Schraubspindel (9) und auf der gegenüberliegenden Seite ein Spannelement (10) angreifen.

4. Schleifspindelstock nach den Ansprüchen 1 bis 3, dadurch gekennzeichnet, daß die Schraubspindel (9) mit einem Stellmotor (15) antreibbar ist.

5. Schleifspindelstock nach den Ansprüchen 1 bis 4, dadurch gekennzeichnet, daß die Einrichtung zum Vorpositionieren von Unterteil (19) und Zwischenteil (6) eine ein schrittweises Positionieren gestattende Verzahnung (11),eine in axialer Richtung zur Schwenkachse (7) wirksame Hubeinrichtung (20) und einen in Umfangsrichtung der Schwenkachse (7) wirksamen Vorpositionierantrieb (21,22,23) enthält.

6. Schleifspindelstock nach den Ansprüchen 1 bis 5, dadurch gekennzeichnet, daß der Stellantrieb (8, 9) der Einrichtung zum Positionieren einen Stellweg aufweist, der wenigstens annähernd der Zahnteilung der Verzahnung (11) zwischen Unterteil (19) und Zwischenteil (6) entspricht.

7. Schleifspindelstock nach den Ansprüchen 1 bis 6, dadurch gekennzeichnet, daß der Stellmotor (15) und/oder die Hubeinrichtung (20) und der Vorpositionierantrieb (21,22,23) mit einer einen Rechner (13) enthaltenden Steuerung verbunden sind.

*Fig.1*

Fig.2

Fig. 3